(19) Europäisches Patentamt
European Patent Office
Office européen des brevets

(11) Publication number: 0 377 642 B1

(12) EUROPEAN PATENT SPECIFICATION

(45) Date of publication of patent specification: 23.11.94

(51) Int. Cl.[5]: A01N 47/36, //(A01N47/36, 47:36,47:30,47:16,47:12,39:04)

(21) Application number: 88908091.7

(22) Date of filing: 05.08.88

(86) International application number:
PCT/US88/02596

(87) International publication number:
WO 89/01289 (23.02.89 89/05)

The file contains technical information submitted after the application was filed and not included in this specification

# (54) HERBICIDES FOR WEED CONTROL IN RICE.

(30) Priority: 07.08.87 US 82697
12.02.88 US 157548
16.05.88 US 194549

(43) Date of publication of application:
18.07.90 Bulletin 90/29

(45) Publication of the grant of the patent:
23.11.94 Bulletin 94/47

(84) Designated Contracting States:
AT BE CH DE FR GB IT LI LU NL SE

(56) References cited:
US-A- 4 394 506

CHEMICAL ABSTRACTS, volume 106 , no.1, 5 January 1987, Columbus, Ohio, US; S. Takeda et al.: "Selection of a rice herbicide from several sulfonylureas", see page 179, abstract 17755u

(73) Proprietor: E.I. DU PONT DE NEMOURS AND COMPANY
1007 Market Street
Wilmington Delaware 19898 (US)

(72) Inventor: ACKERSON, Robert Charles
5444 Pinehurst Drive
Wilmington, DE 19808 (US)
Inventor: YUYAMA, Tajeshi
Cho 1 Ban
12-304, Chuo Toride-shi (JP)

(74) Representative: Hildyard, Edward Martin et al
Frank B. Dehn & Co.
European Patent Attorneys
Imperial House
15-19 Kingsway
London WC2B 6UZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

**CHEMICAL ABSTRACTS, VOL.101, NO.11, 10 SEPTEMBER 1984, COLUMBUS, OHIO, US, SEE PAGE 216, ABSTRACT 85693E; & JP-A-59 82 307**

**CHEMICAAAL ABSTRACTS, VOL. 101, NO.11, 10 SEPTEMBER 1984, COLUMBUS, OHIO, US, SEE PAGE 216, ABSTRACT 85694F; & JP-A-59 82 306**

**CHEMICAL ABSTRACTS, vol. 103, no. 23, 9 December 1985, Columbus, Ohio, US, see page 246, abstract 191467k; & JP-A-60 112 703**

**CHEMICAL ABSTRACTS, vol. 105, no. 19, 10 November 1986, Columbus, Ohio, US, see page 261, abstract 166899m; & JP-A-61 112 003**

## Description

Background of the Invention

This invention relates to novel compositions comprising mixtures of two herbicides and to a method of controlling undesired vegetation in the growth of rice plants by the application of an effective amount of one of the herbicides that comprise the mixture, alone or the composition comprising the mixture.

New compounds effective for controlling the growth of undesired vegetation are in constant demand. In the most common situation, such compounds are sought to selectively control the growth of weeds in useful crops such as cotton, rice, corn, wheat and soybeans, to name a few. Unchecked weed growth in such crops can cause significant losses, reducing profit to the farmer and increasing costs to the consumer. There is especially a need for finding compounds that selectively control the growth of undesired vegetation in growing rice. Rice is a staple crop for millions of people of the world whose diet depends on its availability. There are many products commercially available for such purposes, but the search continues for products which are more effective, less costly and environmentally safe.

The "sulfonylurea" herbicides are an extremely potent class of herbicides discovered within the last few years. A multitude of structural variations exist within this class of herbicides, but they generally consist of a sulfonylurea bridge, $-SO_2NHCONH-$, linking two aromatic or heteroaromatic rings.

U.S. Patent 4,394,506 discloses compounds within the scope of Formula I of the present invention.

U.S. Patent 4,383,113 also discloses compounds within the scope of Formula I of the present invention.

U.S. Patent 4,645,527 discloses the use of certain sulfonamides to protect cereal crops from injury by compounds within the scope of Formula I of the present invention where X is $CH_3$, Y is $OCH_3$ and Z is N.

There is, however, no disclosure in any of the above references of the use of the compounds they describe for control of vegetation in rice.

SUMMARY OF THE INVENTION

This invention utilises compounds of

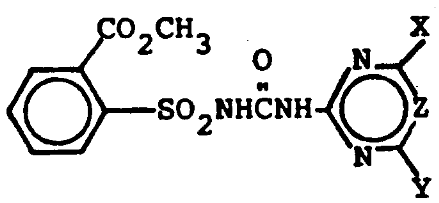

Formula I

wherein

X is $CH_3$ or $OCH_3$;

Y is $OCH_3$; and

Z is N or CH,

provided that when Z is CH then X is $OCH_3$ and when Z is N then X is $CH_3$,

This invention provides in one aspect, a method for controlling the growth of undesired vegetation in a rice crop by applying to the crop after transplantation or emergence of the rice plants 0.5 to 10 g/ha of a compound of Formula I, either alone or in combination with other herbicides selected from 2-4-dichlorophenoxy acetic acid, methyl 2-[[[[[(4,6-dimethoxy-2-pyrimidinyl)amino]carbonyl]amino]sulfonyl]methyl] benzoate (bensulfuron methyl), S-[4-chlorophenyl)methyl] diethylcarbamothioate (thiobencarb), S-1-methyl-1-phenylethylpiperidine-1-carbothioate (dimepiperate), S-benzyl-N-ethyl-N-(1,2-dimethyl) propylthiol carbamate (esprocarb), 1-($\alpha$,$\alpha$-dimethylbenzyl)-3-p-tolylurea (dymron) or N-(3,4-dichlorophenyl) propanamide (propanil).

Another aspect of the invention provides compositions comprising mixtures of compounds of Formula I wherein preferably Z is N and Y is $CH_3$, with bensulfuron methyl.

The preferred methods of the invention for reasons of either more effective weed control or better crop tolerance are:

1. A method for controlling the growth of undesired vegetation in a rice crop by applying to the crop after transplantation or emergence of the rice plants an effective amount of a compound of Formula I wherein Z is N, X is $CH_3$ and Y is $OCH_3$.

2. A method for controlling the growth of undesired vegetation in a rice crop by applying to the crop after transplantation or emergence of the rice plants an effective amount of a compound of Formula I wherein Z is CH, X and Y are $OCH_3$.
3. A method of Preferred I in admixture with a herbicidally effective amount of 2,4-dichloro phenoxyacetic acid.
4. A method of Preferred 1 in admixture with a herbicidally effective amount of bensulfuron methyl.
5. A method of Preferred 1 in admixture with S-[(4-chlorophenyl)methyl]diethylcarbamothioate (Thiobencarb).
6. A method of Preferred 1 in admixture with S-1-methyl-1-phenylethylpiperidine-1-carbothioate (Dimepiperate).
7. A method of Preferred 1 in admixture with S-benzyl-N-ethyl-N-(1,2-dimethyl)-propylthiol carbamate (Esprocarb).
8. A method of Preferred 1 in admixture with 1-($\alpha$,$\alpha$-dimethylbenzyl)-3-p-tolylurea (Dymron).
9. A compound of Formula I wherein Z is N and X is $CH_3$ in admixture with bensulfuron methyl.

Undesired vegetation, especially broadleafed weeds, in a rice crop may be controlled by applying to the crop after transplantation or emergence an effective amount of a compound of Formula I.

Compounds of Formula I may be combined with said other rice herbicides, viz. 2,4-dichloro-phenoxyacetic acid, bensulfuron methyl, thiobencarb, dimepiperate, esprocarb, propanil or dymron to broaden the spectrum of weed control.

## DETAILED DESCRIPTION OF THE INVENTION

The compounds of Formula I are known in the art. Their chemical names are:

- methyl 2-[[[[(4-methoxy-6-methyl-1,3,5-triazin-2-yl)amino]carbonyl]amino]sulfonyl]benzoate (X is $CH_3$, Y is $OCH_3$ and Z is N.)
- methyl 2-[[[[(4,6-dimethoxy-2-pyrimidinyl)amino]carbonyl]amino]sulfonyl]benzoate (X is $OCH_3$, Y is $OCH_3$ and Z is CH.)

In addition, methyl 2-[[[[(4-methoxy-6-methyl-1,3,5-triazin-2-yl)amino]carbonyl]amino]sulfonyl]benzoate is known under the common name of metsulfuron methyl.

The compounds of Formula I wherein X is $OCH_3$, Y is $OCH_3$, and Z is CH and wherein X is $CH_3$, Y is $OCH_3$ and Z is N can be prepared by the processes specifically taught in Examples 1, 3, 4, 5, 6, 12 and 13 of U.S. Patents 4,394,506 and 4,383,113.

As discussed in the Utility section, the compounds of the instant invention are particularly effective in controlling broadleafed weeds and sedges when combined with 2,4-dichlorophenoxyacetic acid (2,4-D), its agriculturally suitable esters or salts, or with bensulfuron methyl, or with Thiobencarb, or with Dimepiperate, or with Esprocarb, or with Dymron. 2,4-D, its esters and salts are well known in the art of weed control. Some of its more frequently used esters are prepared from 2-propanol, n-butanol, 2-butoxyethanol and 6-methyl-1-heptanol. Some of its more frequently used salts are sodium, diethanolamine, diethylamine, dimethylamine, ethanolamine, methylamine and triethanolamine. Neither the list of esters nor the list of salts is intended to be limiting.

The complete chemical name of bensulfuron methyl is methyl 2-[[[[[(4,6-dimethoxy-2-pyrimidinyl)-amino]carbonyl]amino]sulfonyl]methyl]benzoate. It is sold under the tradename of Londax® Herbicide by E. I. du Pont de Nemours and Company for weed control in rice. It is specifically disclosed in U.S. Patent 4,420,325 and can be prepared by the general processes described therein.

## Formulations

Useful formulations of the compounds of Formula I can be prepared in conventional ways. They include dusts, granules, pellets, solutions, suspensions, emulsions, wettable powders, emulsifiable concentrates and the like. Many of these may be applied directly. Sprayable formulations can be extended in suitable media and used at spray volumes of from a few liters to several hundred liters per hectare. High strength compositions are primarily used as intermediates for further formulation. The formulations, broadly, contain about 1% to 99% by weight of active ingredient(s) and at least one of (a) about 0.1% to 20% surfactant(s) and b) about 5% to 99% solid or liquid diluent(s). More specifically, they will contain these ingredients in the following approximate proportions:

| | Percent by Weight | | |
|---|---|---|---|
| | Active Ingredient(s) | Diluent(s) | Surfactant(s) |
| Wettable powders | 20-90 | 0-74 | 1-10 |
| Oil Suspensions, Emulsions, Solutions, (including Emulsifiable Concentrates) | 5-50 | 40-95 | 0-15 |
| Aqueous Suspensions | 10-50 | 40-84 | 1-20 |
| Dusts | 1-25 | 70-99 | 0-5 |
| Granules and Pellets | 1-95 | 5-99 | 0-15 |
| High Strength Compositions | 90-99 | 0-10 | 0-2 |

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Typical solid diluents are described in Watkins, et al., "Handbook of Insecticide Dust Diluents and Carriers", 2nd Ed., Dorland Books, Caldwell, New Jersey, but other solids, either mined or manufactered, may be used. The more absorptive diluents are preferred for wettable powders and the denser ones for dusts. Typical liquid diluents and solvents are described in Marsden, "Solvents Guide," 2nd Ed., Interscience, New York, 1985. Solubility under 0.1% is preferred for suspension concentrates; solution concentrates are preferably stable against phase separation at 0°C. "McCutcheon's Detergents and Emulsifiers Annual", MC Publishing Corp., Ridgewood, New Jersey, as well as Sisely and Wood, "Encyclopedia of Surface Active Agents", Chemical Publishing Co., Inc., New York, 1964, list surfactants and recommended uses. All formulations can contain minor amounts of additives to reduce foaming, caking, corrosion, microbiological growth, etc.

The methods of making such compositions are well known. Solutions are prepared by simply mixing the ingredients. Fine solid compositions are made by blending and, usually, grinding as in a hammer or fluid energy mill. Suspensions are prepared by wet milling (see, for example, Littler, U.S. Patent 3,060,084). Granules and pellets may be made by spraying the active material upon preformed granular carriers or by agglomeration techniques. See J. E. Browning, "Agglomeration", Chemical Engineering, December 4, 1967, pp. 147ff. and "Perry's Chemical Engineer's Handbook", 5th Ed., McGraw-Hill, New York, 1973, pp. 8-57ff.

For further information regarding the art of formulation, see for example:

H. M. Loux, U.S. Patent 3,235,361, February 15, 1966, Col. 6, line 16 through Col. 7, line 19 and Examples 10 through 41;

R. W. Luckenbaugh, U.S. Patent 3,309,192, March 14, 1967, Col. 5, line 43 through Col. 7, line 62 and Examples 8, 12, 15, 39, 41, 52, 53, 58, 132, 138-140, 162-164, 166, 167 and 169-182;

H Gysin and E. Knusli, U.S. Patent 2,891,855, June 23, 1959, Col. 3, line 66 through Col. 5, line 17 and Examples 1-4;

G. C. Klingman, "Weed Control as a Science", John Wiley and Sons, Inc., New York, 1961, pp. 81-96; and

J. D. Fryer and S. A. Evans, "Weed Control Handbook", 5th Ed., Blackwell Scientific Publications, Oxford, 1968, pp. 101-103.

Example 1

| Wettable Powder | |
|---|---|
| 2,4-dichlorophenoxyacetic acid, sodium salt | 60% |
| methyl 2-[[[[(4-methoxy-6-methyl-1,3,5-triazin-2-yl)amino]carbonyl]amino]sulfonyl]benzoate | 1% |
| dodecylphenol polyethylene glycol ether | 2% |
| sodium ligninsulfonate | 4% |
| sodium silicoaluminate | 6% |
| sodium carbonate | 2% |
| montmorillonite (calcined) | 25% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Example 2

| Wettable Powder | |
|---|---|
| methyl 2-[[[[(4-methoxy-6-methyl-1,3,5-triazin-2-yl)amino]carbonyl]amino]sulfonyl]benzoate | 40% |
| dioctyl sodium sulfosuccinate | 1.5% |
| sodium ligninsulfonate | 3% |
| low viscosity methyl cellulose | 1.5% |
| attapulgite | 54% |

The ingredients are thoroughly blended, passed through an air mill, to produce an average particle size under 15 microns, reblended, and sifted through a U.S.S. No. 50 sieve (0.3 mm opening) before packaging.

Example 3

| Granule | |
|---|---|
| wettable powder of Example 2 | 25% |
| gypsum | 64% |
| potassium sulfate | 11% |

The ingredients are blended in a rotating mixer and water sprayed on to accomplish granulation. When most of the material has reached the desired range of 1.0 to 0.42 mm, (U.S.S. #18 to 40 sieves), the granules are removed, dried, and screened. Oversize material is crushed to produce additional material in the desired range. These granules contain 10% active ingredient.

Example 4

| Oil Suspension | |
|---|---|
| methyl 2-[[[[(4-methoxy-6-methyl-2-pyrimidinyl)amino]carbonyl]amino]sulfonyl]benzoate | 25% |
| polyoxyethylene sorbitol hexaoleate | 5% |
| highly aliphatic hydrocarbon oil | 70% |

The ingredients are ground together in a sand mill until the solid particles have been reduced to under about 5 microns. The resulting thick suspension may be applied directly, but preferably after being extended with oils or emulsified in water.

Example 5

| Aqueous Suspension | |
|---|---|
| methyl 1-[[[[(4-methoxy-6-methyl-1,3,5-triazin-2-yl)amino]carbonyl]amino]sulfonyl]benzoate | 25% |
| hydrated attapulgite | 3% |
| crude calcium ligninsulfonate | 10% |
| sodium dihydrogen phosphate | 0.5% |
| water | 61.5% |

The ingredients are ground together in a ball or roller mill until the solid particles have been reduced to diameters under 10 microns.

Example 6

| Wettable Powder | |
|---|---|
| methyl 2-[[[[(4,6-dimethoxy-2-pyrimidinyl)amino]carbonyl]amino]sulfonyl]benzoate | 95% |
| dioctyl sodium sulfosuccinate | 0.5% |
| sodium ligninsulfonate | 1.5% |
| synthetic fine silica | 3.0% |

The ingredients are blended and ground in a hammermill to produce particles, almost all of which are below 100 microns in size. This material is sifted through a U.S.S. No. 50 (0.3 mm) screen and then packaged.

Example 7

| Granule | |
|---|---|
| wettable powder of Example 6 | 8% |
| wettable powder of Example 2 | 2% |
| attapulgite granules (U.S.S. No. 20-40 mesh) | 90% |

A slurry of the wettable powders is sprayed onto the surface of the granules, which are being mixed in a blender. After the slurry has been added, the granules are removed from the blender, dried and packaged.

Example 8

| Oil Suspension | |
|---|---|
| 2,4-dichlorophenoxyacetic acid, butoxyethyl ester | 24.6% |
| methyl 2-[[[[(4-methoxy-6-methyl-1,3,5-triazin-2-yl)amino]carbonyl]amino]sulfonyl]benzoate | 0.4% |
| polyoxyethylene sorbitol hexaoleate | 5% |
| highly aliphatic hydrocarbon oil | 70% |

The ingredients use ground together in a sand mill until the solid particles have been reduced to under about 5 microns. The resulting thick suspension may be applied directly, but preferably after being extended with oils or emulsified in water.

Example 9

| Extruded Pellet | |
|---|---|
| methyl 2-[[[[(4,6-dimethoxy-2-pyrimidinyl)amino]carbonyl]amino]sulfonyl]benzoate | 25% |
| anhydrous sodium sulfate | 10% |
| crude calcium ligninsulfonate | 5% |
| sodium alkylnaphthalenesulfonate | 1% |
| calcium/magnesium bentonite | 59% |

The ingredients are blended, hammermilled and then moistened with about 12% water. The mixture is extruded as cylinders about 3 mm diameter which are cut to produce pellets about 3 mm long. These may be used directly after drying, or the dried pellets may be crushed to pass a U.S.S. No. 20 sieve (0.84 mm openings). The granules held on a U.S.S. No. 40 sieve (0.42 mm openings) may be packaged for use and the fines recycled.

Example 10

| Granule | |
|---|---|
| methyl 2-[[[[(4-methoxy-6-methyl-1,3,5-triazin-2-yl]carbonyl]amino]sulfonyl)benzoate | 10% |
| methyl 2-[[[[[(4,6-dimethoxy-2-pyrimidinyl)amino]carbonyl]aminosulfonyl]methyl]benzoate | 50% |
| wetting agent | 1% |
| dispersing agent | 2% |
| crude ligninsulfonate salt (containing 5-20% of the natural sugars) | 10% |
| attapulgite clay | 27% |

The ingredients are blended and milled to pass through a 100 mesh screen. This material is then added to a fluid bed granulator, the air flow is adjusted to gently fluidize the material, and a fine spray of water is sprayed onto the fluidized material. The fluidization and spraying are continued until granules of the desired size range are made. The spraying is stopped, but fluidization is continued, optionally with heat, until the water content is reduced to the desired level, generally less than 1%. The material is then discharged, screened to the desired size range, generally 14-100 mesh (1410-149 microns), and packaged for use.

Example 11

| Wettable Powder | |
|---|---|
| methyl 2-[[[[(4,6-dimethoxy-2-pyrimidinyl)amino]carbonyl]amino]sulfonyl]benzoate | 80% |
| sodium alkylnaphthalenesulfonate | 2% |
| sodium ligninsulfonate | 2% |
| synthetic amorphous silica | 3% |
| kaolinite | 13% |

The ingredients are blended and then ground in a hammermill to produce particles with an average particle size less than 25 microns in diameter. The material is reblended and sifted through a U.S.S. No. 50 sieve (0.3 mm opening) before being packaged.

Example 12

| Wettable Powder | |
|---|---|
| methyl 2-[[[[(4-methoxy-6-methyl-1,3,5-triazin-2-yl)amino]carbonyl]amino]sulfonyl]benzoate | 4% |
| methyl 2-[[[[[(4,6-dimethoxy-2-pyrimidinyl)amino]carbonyl]amino]sulfonyl]methyl]benzoate | 36% |
| dioctyl sodium sulfosuccinate | 1.5% |
| sodium ligninsulfonate | 3% |
| low viscosity methyl cellulose | 1.5% |
| attapulgite | 54% |

The ingredients are thoroughly blended, passed through an air mill, to produce an average particle size under 15 microns, reblended, and sifted through a U.S.S. No. 50 sieve (0.3 mm opening) before packaging.

All compounds of the invention may be formulated in the same manner.

Example 13

| Extruded Pellet | |
|---|---|
| methyl 2-[[[[(4-methoxy-6-methyl-1,3,5-triazin-2-yl)amino]carbonyl]amino]sulfonyl]benzoate | 1% |
| methyl 2-[[[[[(4,6-dimethoxy-2-pyrimidinyl)amino]carbonyl]aminosulfonyl]methyl]benzoate | 24% |
| anhydrous sodium sulfate | 10% |
| crude calcium ligninsulfonate | 5% |
| sodium alkylnaphthalenesulfonate | 1% |
| calcium/magnesium bentonite | 59% |

The ingredients are blended, hammermilled and then moistened with about 12% water. The mixture is extruded as cylinders about 3 mm diameter which are cut to produce pellets about 3 mm long. These may be used directly after drying, or the dried pellets may be crushed to pass a U.S.S. No. 20 sieve (0.84 mm openings). The granules held on a U.S.S. No. 40 sieve (0.42 mm openings) may be packaged for use and the fines recycled.

Example 14

| Wettable Powder | |
|---|---|
| methyl 2-[[[[(4-methoxy-6-methyl-1,3,5-triazin-2-yl)amino]carbonyl]amino]sulfonyl]benzoate | 65% |
| dodecylphenol polyethylene glycol ether | 2% |
| sodium ligninsulfonate | 4% |
| sodium silicoaluminate | 6% |
| montmorillonite (calcined) | 23% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Example 15

| Wettable Powder | |
|---|---|
| 2,4-dichlorophenoxyacetic acid, sodium salt | 49.5% |
| methyl 2-[[[[(4-methoxy-6-methyl-1,3,5-triazin-2-yl)amino]carbonyl]amino]sulfonyl]benzoate | 0.5% |
| sodium alkylnaphthalenesulfonate | 2% |
| low viscosity methyl cellulose | 2% |
| diatomaceous earth | 46% |

The ingredients are blended, coarsely hammermilled and then air milled to produce particles of active essentially all below 10 microns in diameter. The product is reblended before packaging.

Example 16

| Wettable Powder | |
|---|---|
| S-[(4-chlorophenyl)methyl]diethylcarbamothioate | 60% |
| methyl 2-[[[[(4-methoxy-6-methyl-1,3,5-triazin-2-yl)amino]carbonyl]amino]sulfonyl]benzoate | 1% |
| dodecylphenol polyethylene glycol ether | 2% |
| sodium ligninsulfonate | 4% |
| sodium silicoaluminate | 6% |
| sodium carbonate | 2% |
| montmorillonite (calcined) | 25% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Example 17

| Wettable Powder | |
|---|---|
| S-1-methyl-1-phenylethylpiperidine-1-carbothioate | 60% |
| methyl 2-[[[[(4-methoxy-6-methyl-1,3,5-triazin-2-yl)amino]carbonyl]amino]sulfonyl]benzoate | 1% |
| dodecylphenol polyethylene glycol ether | 2% |
| sodium ligninsulfonate | 4% |
| sodium silicoaluminate | 6% |
| sodium carbonate | 2% |
| montmorillonite (calcined) | 25% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Example 18

| Wettable Powder | |
|---|---|
| S-benzyl-N-ethyl-N-(1,2-dimethyl)-propylthiol carbamate | 60% |
| methyl 2-[[[[(4-methoxy-6-methyl-1,3,5-triazin-2-yl)amino]carbonyl]amino]sulfonyl]benzoate | 1% |
| dodecylphenol polyethylene glycol ether | 2% |
| sodium ligninsulfonate | 4% |
| sodium silicoaluminate | 6% |
| sodium carbonate | 2% |
| montmorillonite (calcined) | 25% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Example 19

| Wettable Powder | |
|---|---|
| 1-(α,α-dimethylbenzyl)-3-p-tolylurea | 60% |
| methyl 2-[[[[(4-methoxy-6-methyl-1,3,5-triazin-2-yl)amino]carbonyl]amino]sulfonyl]benzoate | 1% |
| dodecylphenol polyethylene glycol ether | 2% |
| sodium ligninsulfonate | 4% |
| sodium silicoaluminate | 6% |
| sodium carbonate | 2% |
| montmorillonite (calcined) | 25% |

The ingredients are thoroughly blended. The liquid surfactant is added by spraying upon the solid ingredients in the blender. After grinding in a hammermill to produce particles essentially all below 100 microns, the material is reblended and sifted through a U.S.S. No. 50 sieve (0.3 mm opening) and packaged.

Utility

The compounds of this invention are useful for the control of weeds in rice and may be used in both transplanted and direct seeded rice. They are applied postemergence to the crop and may be applied from 7 days after transplanting or emergence to the time the rice crop has closed and no longer needs chemical weed control. They may be applied as a foliar spray in sufficient water to evenly distribute the treatment. Additives may be included in the spray to aid in penetration of the treatment.

The chemicals are particularly effective in controlling broadleafed weeds and may be combined with other rice herbicides to broaden the spectrum of weed control. They are particularly effective on broadleafed weeds and sedges when combined with 2,4-dichlorophenoxyacetic acid (2,4-D), its agriculturally suitable esters or salts, or with bensulfuron methyl.

Particularly useful combinations with 2,4-D comprise ratios of instant compound to 2,4-D of 4:125 to 1:625. Particularly useful combinations with bensulfuron methyl comprise ratios of instant compound to bensulfuron methyl of 1:2 to 1:50. The compounds of this invention may also be mixed with other rice herbicides including thiobencarb, esprocarb, dymron, dimepiperate, butachlor, molinate, ethyl 5-[[[[(4,6-dimethoxy-2-pyrimidinyl)amino]carbonyl]amino]sulfonyl]-1-methyl-1H-pyrazole-4-carboxylate, naproanilide, bentazon, cinmethylin, chlormethoxnyl, quinchlorac, pretilachlor, MCPA, propanil, diflufenican, oxadiazon, and pyrazolate.

The application rates of the compounds of this invention may vary from 0.5 to 10 g/ha (preferably 1 to 5 g/ha) depending on weeds to be controlled, stage of growth of the crop and weeds, crop variety and environmental conditions at the time of application. One with ordinary skill in the art can select the rate to

be used in each situation.

The examples below clearly demonstrate the utility of the compounds of this invention both alone and in mixtures.

Examples

Methyl 2-[[[[(4-methoxy-6-methyl-1,3,5-triazin-2-yl)amino]carbonyl]amino]sulfonyl]benzoate (Compound 1) and mixtures thereof with other compounds were applied as a spray (using a hand sprayer) to rice (either transplanted or direct seeded) in several rice growing areas in Southeast Asia and in the U.S. Tables 1-28 contain the results of these tests and clearly exemplify the utility of this invention. The details of each application are included in the appropriate table.

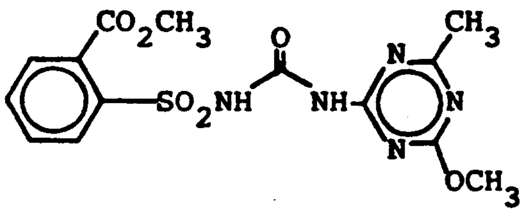

Compound 1

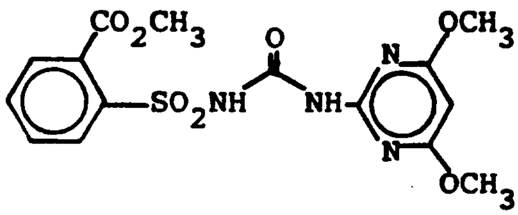

Compound 2

Table 1

| Herbicidal efficacy[1] of Compound 1 in Thailand | | | | | |
|---|---|---|---|---|---|
| TREATMENT[3] | RATE[2] | SZ[5] | CY[5] | SZ[5] | SZ[5] |
| | (GAI/HA) | 2WAA[4] | 2WAA[4] | 4WAA[4] | 6WAA[4] |
| Trial 1 | 2 | 100 | 33 | 100 | 100 |
| | 3 | 99 | 67 | 100 | 100 |
| | 4 | 100 | 67 | 100 | 100 |
| | 6 | 100 | 67 | 100 | 100 |
| Trial 2 | 2 | 97 | 0 | 99 | 99 |
| | 3 | 100 | 67 | 100 | 100 |
| | 4 | 99 | 33 | 99 | 100 |
| | 6 | 100 | 67 | 100 | 100 |

1. 100 denotes complete control, and 0 denotes no control.
2. Application rate in grams active ingredient per hectare.
3. Treatments applied at 36 days after seeding.
4. WAA = weeks after application (evaluation).
5. Abbreviations: SZ = Sphenoclea zeylanica
CY = Cyperus species

Table 2

| Effects of Compound 1 on rice growth in Thailand based on an average of three results | | | | | |
|---|---|---|---|---|---|
| TREATMENT | | PHYTOTOXICITY[2] | | | |
| | GAI/HA[1] | 7 DAS[3] | 14 DAS[3] | 21 DAS[3] | 28 DAS[3] |
| Compound 1 | 3 | 1.67 | 1.0 | 0 | 0 |
| Compound 1 | 6 | 1.33 | 1.0 | 0 | 0 |
| 2,4-D (SODIUM SALT) | 600 | 2.33 | 1.33 | 0 | 0 |
| 2,4-D (BUTYL ESTER) | 600 | 2.0 | 1.67 | 0 | 0 |
| Compound 1 + 2,4-D (SODIUM SALT) | 3+600 | 2.33 | 1.0 | 0.67 | 0 |
| Compound 1 + 2,4-D (BUTYL ESTER) | 3+600 | 2.67 | 1.33 | 0 | 0 |
| Compound 1 + PROPANIL | 3+600 | 2.0 | 1.0 | 0 | 0 |

1. Application rate in grams active ingredient per hectare.
2. Phytotoxicity scale is: 0 = no effect
3 = unacceptable
10 = 100% plant death
3. DAS = days after seeding (application time).

Table 3

| Herbicidal efficacy of Compound 1 and combinations with 2,4-D in Thailand based on an average of three results | | | | | |
|---|---|---|---|---|---|
| TREATMENT | RATE[1] | FIMBRISTYLIS MILIACEA CONTROL[2] | | | |
| | (GAI/HA) | 7 DAS[3] | 14 DAS[3] | 21 DAS[3] | 28 DAS[3] |
| Compound 1 | 3 | 53 | 20 | 0 | 0 |
| Compound 1 | 6 | 73 | 40 | 0 | 0 |
| 2.4-D (SODIUM SALT) | 600 | 96 | 95 | 93 | 98 |
| 2,4-D (BUTYL ESTER) | 600 | 94 | 98 | 60 | 43 |
| Compound 1 + 2,4-D (SODIUM SALT) | 3+600 | 97 | 90 | 92 | 100 |
| Compound 1 + 2,4-D (BUTYL ESTER) | 3+600 | 70 | 47 | 27 | 43 |

1. Application rate in grams active ingredient per hectare.
2. % Control evaluated at 6 weeks after application.
3. DAS = days after seeding (application time).

Table 4

| Effects of Compound 1 on rice growth in Thailand based on an average of three results | | | | | |
|---|---|---|---|---|---|
| TREATMENTS | | PHYTOTOXICITY[2] | | | |
| | GAI/HA[1] | 7 DAS[3] | 14 DAS[3] | 21 DAS[3] | 28 DAS[3] |
| Compound 1 | 3 | 1.67 | 1.0 | 0.67 | 0 |
| Compound 1 | 6 | 1.67 | 1.0 | 1.0 | 0 |
| 2,4-D (SODIUM SALT) | 600 | 5.0 | 3.67 | 3.0 | 1 |
| 2,4-D (BUTYL ESTER) | 600 | 3.67 | 2.33 | 2.67 | 3 |
| Compound 1 + 2,4-D (SODIUM SALT) | 3+600 | 4.67 | 2.67 | 4.33 | 1.67 |
| Compound 1 + 2,4-D (BUTYL ESTER) | 3+600 | 3.33 | 2.33 | 4.0 | 2.0 |

1. Application rate in grams active ingredient per hectare.
2. Phytotoxicity scale is: 0 = no effect
3 = unacceptable
10 = 100% plant death
3. DAS = days after seeding (application time).

Table 5

Herbicidal efficacy of Compound 1 in relation to application timing in Indonesia

| TREATMENT[1] | RATES[2] GAI/HA[2] | MV[3] 1[4] | MV[3] 2 | MV[3] 3 | CI[3] 1 | CI[3] 2 | CI[3] 3 | PS[3] 1 | PS[3] 2 | PS[3] 3 | RICE 1 | RICE 2 | RICE 3 |
|---|---|---|---|---|---|---|---|---|---|---|---|---|---|
| | | ----% CONTROL---- | | | | | | | | | | | |
| Compound 1 (3 WAT)[5] | 2 | 80 | 80 | 100 | 0 | 0 | 0 | 0 | 0 | 0 | 0 | 0 | 0 |
| | 3 | 80 | 100 | 100 | 20 | 0 | 0 | 0 | 0 | 0 | 0 | 0 | 0 |
| | 4 | 100 | 100 | 100 | 20 | 0 | 0 | 0 | 0 | 0 | 0 | 0 | 0 |
| | 6 | 80 | 100 | 100 | 20 | 0 | 0 | 0 | 0 | 0 | 0 | 0 | 0 |
| | 8 | 100 | 100 | 100 | 20 | 0 | 0 | 0 | 0 | 0 | 0 | 0 | 0 |
| Compound 1 (4 WAT) | 2 | 80 | 100 | 100 | 0 | 0 | 0 | 0 | 0 | 0 | 0 | 0 | 0 |
| | 3 | 80 | 100 | 100 | 0 | 0 | 0 | 0 | 0 | 0 | 0 | 10 | 0 |
| | 4 | 80 | 100 | 100 | 20 | 20 | 0 | 0 | 0 | 0 | 20 | 20 | 0 |
| | 6 | 80 | 100 | 100 | 20 | 20 | 0 | 0 | 0 | 0 | 20 | 20 | 0 |
| | 8 | 100 | 100 | 100 | 20 | 20 | 0 | 0 | 0 | 0 | 20 | 20 | 0 |
| Compound 1 (5 WAT) | 2 | 80 | 80 | 80 | 0 | 0 | 0 | 0 | 0 | 0 | 10 | 0 | 0 |
| | 3 | 80 | 100 | 100 | 50 | 20 | 0 | 0 | 0 | 0 | 10 | 0 | 0 |
| | 4 | 80 | 100 | 100 | 60 | 30 | 0 | 0 | 0 | 0 | 30 | 0 | 0 |
| | 6 | 80 | 100 | 100 | 60 | 40 | 0 | 0 | 0 | 0 | 0 | 0 | 0 |
| | 8 | 100 | 100 | 100 | 60 | 60 | 30 | 0 | 0 | 0 | 30 | 10 | 0 |

1. Plots drained prior to application and reflooded 3 days later.
2. Application rate in grams active ingredient per hectare.
3. Abbreviations: MV = *Monochoria vaginalis*
   CI = *Cyperus iria*
   PS = *Pistia stratioides*
4. Weeks after application (evaluation).
5. WAT = weeks after transplanting (application).

Table 6

Herbicidal efficacy of Compound 1 in Indonesia

| TREATMENT[1] | RATES[2] | SM[3] | | | SJ | | | MV | | | EC | | | RICE |
|---|---|---|---|---|---|---|---|---|---|---|---|---|---|---|
| | GAI/HA[2] | 2[4] | 5 | 7 | 2 | 5 | 7 | 2 | 5 | 7 | 2 | 5 | 7 | 2 |
| | | ----% CONTROL---- | | | | | | | | | | | | |
| Compound 1 | 3 | 30 | 70 | 80 | 60 | 90 | 70 | 100 | 100 | 100 | 20 | 30 | 0 | 10 |
| | 4 | 40 | 70 | 80 | 60 | 100 | 70 | 90 | 100 | 100 | 20 | 30 | 0 | 10 |
| | 6 | 30 | 90 | 90 | 90 | 100 | 80 | 100 | 100 | 100 | 20 | 30 | 0 | 10 |
| | 8 | 40 | 80 | 90 | 80 | 100 | 80 | 100 | 100 | 100 | 20 | 30 | 0 | 10 |
| Compound 1 + HERBA-ZOL[5] | 3+515 | 20 | 70 | 80 | 90 | 100 | 100 | 100 | 100 | 100 | 20 | 30 | 0 | 10 |
| | 4+515 | 30 | 90 | 80 | 80 | 90 | 100 | 90 | 100 | 100 | 20 | 30 | 0 | 10 |
| | 6+515 | 30 | 70 | 90 | 80 | 100 | 80 | 100 | 100 | 100 | 20 | 40 | 0 | 10 |
| HERBAZOL | 515 | 10 | 50 | 30 | 80 | 100 | 90 | 80 | 50 | 50 | 20 | 30 | 0 | 10 |
| | 1033 | 0 | 50 | 30 | 100 | 100 | 90 | 100 | 50 | 50 | 20 | 30 | 0 | 10 |

1. Application was at 2 weeks after transplanting. Plots were drained prior to application and reflooded 3 days after application.
2. Application rate in grams active ingredient per hectare.
3. Abbreviations: SM = *Salvinia molesta*
   MV = *Monochoria vaginalis*
   SJ = *Scirpus juncoides*
   EC = *Echinochloa crus-galli*
4. Weeks after application (evaluation).
5. 2,4-D amine salt.

Table 7

| Effects of herbicide treatments on the crop tolerance of transplanted rice | | | | |
|---|---|---|---|---|
| TREATMENTS | CROP TOLERANCE[1] | | | |
| GAI/HA[2] | 1 WAA[3] | 2WAA | 4WAA | 6WAA |
| Compound 1 | | | | |
| 3 | 0 | 0 | 0 | 0 |
| 4 | 0 | 0 | 0 | 0 |
| 6 | 1 | 0 | 0 | 0 |
| 8 | 1 | 1 | 0 | 0 |
| Compound 1 + HERBAZOL[4] | | | | |
| 3+515 | 0 | 0 | 0 | 0 |
| 4+515 | 1 | 0 | 0 | 0 |
| 6+515 | 2 | 1 | 0 | 0 |
| HERBAZOL | | | | |
| 515 | 1 | 1 | 0 | 0 |
| 1,030 | 2 | 2 | 0 | 0 |

1. Crop tolerance rating: 0 = no effect; 10 = completely killed
2. Application rate in grams active ingredient per hectare.
3. WAA = weeks after application (evaluation).
4. 2,4-D amine salt.

Table 8

| Herbicidal efficacy of Compound 1 and combinations with 2,4-D in Malaysia | | | | | | | |
|---|---|---|---|---|---|---|---|
| TREATMENT[1] | RATES[2] | SG[3] | MV | SZ | CD | FM | MC |
| | GAI/HA | ----% CONTROL---- | | | | | |
| Compound | 1 1 | 80 | 95 | 0 | 0 | 0 | 20 |
| | 2 | 100 | 95 | 100 | 100 | 100 | 95 |
| | 3 | 95 | 100 | 100 | 95 | 50 | 100 |
| | 4 | 95 | 100 | 100 | 100 | 50 | 95 |
| | 5 | 100 | 100 | 100 | 100 | 20 | 100 |
| 2,4-D[4] | 500 | 50 | 90 | 100 | 95 | 100 | 0 |
| | 1000 | 75 | 100 | 100 | 100 | 100 | 0 |
| Compound + 2,4-D | 1 | | | | | | |
| | 1 + 500 | 90 | 95 | 100 | 67 | 100 | 95 |
| | 2 + 500 | 95 | 100 | 100 | 95 | 100 | 100 |
| | 3 + 500 | 100 | 100 | 100 | 100 | 100 | 100 |
| | 4 + 500 | 100 | 100 | 100 | 100 | 100 | 100 |
| | 5 + 500 | 100 | 100 | 100 | 95 | 95 | 100 |

1. Applications at 30 days after seeding. Evaluation at 22 days after treatment.
2. Application rate in grams active ingredient per hectare.
3. Abbreviations: SG = Scirpus grossus
MV = Monochoria vaginalis
SZ = Sphenoclea zeylanica
CD = Cyperus difformis
FM = Fimbristylis miliacea
MC = Marsilea crenata
4. 2,4-D was dimethylamine salt.

Table 9

| Broadleaf weed control with a late-post application of Compound 1 in Beaumont, Texas | | | | | | | | |
|---|---|---|---|---|---|---|---|---|
| RATE | RICE | EC | SE | AI | CC | COM | EA | SEDGE |
| G/HA | % INJURY OR CONTROL | | | | | | | |
| 3 | 3 | 26 | 68 | 68 | 11 | 13 | 13 | 43 |
| 6 | 5 | 30 | 62 | 62 | 19 | 24 | 23 | 56 |
| 12 | 6 | 24 | 46 | 46 | 18 | 23 | 15 | 56 |

1. Compound 1 applied with 0.25% AG-98 wetting agent.
2. Application rate is stated in units of grams active ingredient per hectare.
3. Treated 30 days after seeding (24 days after emergence) to wet soil; flooded 24 days after emergence (6 days after application); evaluated at 70 days after seeding.
4. Abbreviations: EC = Echinochloa colonum
SE = Sesbania exaltata
AI = Aeschynomene indica
CC = Caperonia castaniifolia
COM = Commelina communis
EA = Eclipta alba
SEDGE = Annual sedge (?)

Table 10

| Field Test Results of Compound 1 + Bensulfuron methyl for weed control in direct seeded rice | | | | | |
|---|---|---|---|---|---|
| TREATMENTS | GAI/HA[1] | WEEDS CONTROL[2] at 4 WAA | | | YIELD TONS/HA |
| | | SZ[3] | CI[4] | MC[5] | |
| COMPOUND 1 | 2 | 7.93 | 0 | 10 | 3.62 |
| COMPOUND 1 | 4 | 9.33 | 0 | 10 | 3.62 |
| BENSULFURON METHYL | 10 | 0 | 2 | 0 | 3.04 |
| BENSULFURON METHYL | 20 | 6 | 8 | 3.33 | 3.34 |
| COMPOUND 1 + BENSULFURON METHYL | 2+10 | 9.1 | 6.33 | 10 | 3.64 |
| COMPOUND 1 + BENSULFURON METHYL | 4+10 | 9.93 | 5.0 | 10 | 3.79 |
| COMPOUND 1 + BENSULFURON METHYL | 2+20 | 8.33 | 5.67 | 10 | 3.50 |
| COMPOUND 1 + BENSULFURON METHYL | 4+20 | 10 | 9.0 | 10 | 3.72 |
| UNTREATED | - | 0 | 0 | 0 | 2.75 |

1. Application rate is stated in units of grams active ingredient per hectare.
2. 10 is complete control, and 0 is no control, WAA = weeks after application (evaluation).
3. SZ = Sphenoclea zeylanica
4. CI = Cyperus iria
5. MC = Marsilea crenata

Table 11

| Field Test Results of Compound 1 + Bensulfuron methyl applied at 7 DAS[1] for weed control in direct seeded rice | | | | | |
|---|---|---|---|---|---|
| TREATMENTS | GM.A.I.[2] /HA | PHYTO[3] at 2WAA | WEED CONTROL[4] at 6 WAA | | YIELD TONS/HA |
| | | | SZ[5] | CD[6] | |
| COMPOUND 1 | 4 | 0 | 10 | 10 | 4.90 |
| BENSULFURON METHYL | 10 | 0 | 10 | 10 | 4.92 |
| | 15 | 0 | 10 | 10 | 4.99 |
| | 20 | 0 | 10 | 10 | 5.01 |
| | 30 | 0 | 10 | 10 | 4.67 |
| COMPOUND 1 + BENSULFURON METHYL | 4+10 | 0 | 10 | 10 | 5.35 |
| | 4+15 | 0 | 10 | 10 | 4.56 |
| | 4+20 | 0 | 10 | 10 | 4.73 |
| COMPOUND 1 + 2,4-D (NA)[7] | 4+750 | 0 | 10 | 10 | 4.81 |
| 2,4-D (NA) | 1,500 | 0 | 6.0 | 10 | 4.13 |
| UNTREATED | - | 0 | 0 | 0 | 3.55 |

1. DAS = Days after seeding
2. Application rate is stated in units of grams active ingredient per hectare.
3. Phytotoxicity is rated on a scale of:
0 = no effect
3 = unacceptable
10 = 100% plant death
4. Control is rated on a scale of:
0 = no control
10 = complete control
WAA = weeks after application
5. SZ = Sphenoclea zeylanica
6. CD = Cyperus difformis
7. Sodium salt of 2,4-D.

Table 12

| Field Test Results of Compound 1 + Bensulfuron methyl applied at 18 DAS[1] for weed control in direct seeded rice | | | | | | | |
|---|---|---|---|---|---|---|---|
| TREATMENTS | GM.A.I.[2] /HA | PHYTO[3] at 2WAA | WEED CONTROL[4] at 6 WAA | | | | YIELD TONS/HA |
| | | | SZ[5] | CI[6] | FM[7] | JL[8] | |
| COMPOUND 1 | 4 | 0 | 6.33 | 0.33 | 0 | 7.67 | 4.65 |
| BENSULFURON METHYL | 10 | 0 | 5.67 | 6.67 | 10 | 8.0 | 4.61 |
| | 15 | 0 | 6.67 | 9.0 | 9.67 | 7.67 | 4.49 |
| | 20 | 0 | 5.67 | 9.33 | 10 | 9.50 | 4.61 |
| | 30 | 0 | 9.67 | 9.67 | 10 | 8.67 | 5.17 |
| COMPOUND 1 + BENSULFURON METHYL | 4+10 | 0 | 10 | 8.83 | 10 | 9.50 | 5.40 |
| | 4+15 | 0 | 10 | 10 | 10 | 10 | 5.40 |
| | 4+20 | 0 | 10 | 9.63 | 9.67 | 10 | 5.06 |
| COMPOUND 1 + 2,4-D (NA)[9] | 4+750 | 0 | 9.0 | 9.67 | 9.0 | 10 | 5.04 |
| 2,4-D (NA) | 1,500 | 0 | 4.67 | 9.33 | 9.33 | 10 | 4.59 |
| UNTREATED | - | 0 | 0 | 0 | 0 | 0 | 4.31 |

1. DAS = Days after seeding
2. Application rate is stated in units of grams active ingredient per hectare.
3. Phytotoxicity is rated on a scale of:
0 = no effect
3 = unacceptable
10 = 100% plant death
WAA = weeks after application
4. Control is rated on a scale of:
0 = no control
10 = complete control
WAA = weeks after application
5. SZ = Sphenoclea zeylanica
6. CI = Cyperus iria
7. FM = Fimbristylis miliacea
8. JL = Jussiaea linifolia
9. Sodium salt of 2,4-D.

Table 13

| Field Test Results of Compound 1 + Bensulfuron methyl applied at 25 DAS[1] for weed control in direct seeded rice | | | | | |
|---|---|---|---|---|---|
| TREATMENTS | GM.A.I.[2] /HA | PHYTO[3] at 2WAA | WEED CONTROL[4] at 6 WAA | | YIELD TONS/HA |
| | | | SZ[5] | CI[6] | |
| COMPOUND 1 | 4 | 0 | 9.53 | 0 | 5.04 |
| BENSULFURON METHYL | 10 | 0 | 9.17 | 9.67 | 4.77 |
| | 15 | 0 | 9.80 | 9.83 | 4.85 |
| | 20 | 0 | 9.50 | 10 | 5.40 |
| | 30 | 0 | 9.93 | 10 | 5.51 |
| COMPOUND 1 + BENSULFURON METHYL | 4+10 | 0 | 10 | 9.5 | 5.57 |
| | 4+15 | 0 | 10 | 10 | 5.51 |
| | 4+20 | 0 | 9.83 | 10 | 5.34 |
| COMPOUND 1 + 2,4-D (NA)[7] | 4+750 | 0 | 10 | 10 | 4.83 |
| 2,4-D (NA) | 1,500 | 0 | 6.67 | 10 | 4.59 |
| UNTREATED | - | 0 | 0 | 0 | 4.27 |

1. DAS = Days after seeding
2. Application rate is stated in units of grams active ingredient per hectare.
3. Phytotoxicity is rated on a scale of:
0 = no effect
3 = unacceptable
10 = 100% plant death
WAA = weeks after application
4. Control is rated on a scale of:
0 = no control
10 = complete control
WAA = weeks after application
5. SZ = Sphenoclea zeylanica
6. CI = Cyperus iria
7. Sodium salt of 2,4-D.

Table 14

| Field Test Results of Compound 1 + Bensulfuron Methyl, Applied 7 DAS[1], for weed control in direct seeded rice in the Philippines, average of 3 repetitions | | | | |
|---|---|---|---|---|
| TREATMENTS | PHYTO[3] (1-9) | % WEED COVER | % BYG[4] COVER | % SEDGE COVER |
| G AI/HA[2] | 30 DAA | 47 DAA | 47 DAA | 47 DAA |
| COMPOUND 1 1.65 + BENSULFURON METHYL 8.25 | 1.7 | 20 | 18 | 5 |
| COMPOUND 1 2.40 + BENSULFURON METHYL 12.0 | 2.3 | 28 | 17 | 3 |
| COMPOUND 1 3.33 + BENSULFURON METHYL 16.5 | 4.3 | 3 | 3 | 0.5 |
| COMPOUND 1 1.65 | 2 | 29 | 26 | 5 |
| COMPOUND 1 2.40 | 2.3 | 35 | 35 | 6 |
| COMPOUND 1 3.33 | 3.3 | 35 | 35 | 4 |
| BENSULFURON METHYL 8.25 | 1.3 | 29 | 29 | 4 |
| BENSULFURON METHYL 12.0 | 1 | 20 | 17 | 2 |
| BENSULFURON METHYL 16.50 | 1.7 | 28 | 28 | 2 |
| Untreated Check | 1 | 46 | 27 | 18 |

1. DAS = Days after seeding
2. Application rate is stated in units of grams active ingredient per hectare.
3. Phytotoxicity is rated on a scale of:
1 = no effect
9 = 100% plant death
DAA = days after application
4. Barnyardgrass (Echinochloa crus-galli)

Table 15

| Effects of Compound 1 in Combination With Thiobencarb, Dimepiperate, Esprocarb and Dymron on Rice Growth | | | | |
|---|---|---|---|---|
| TREATMENT | RATE GAI/HA[1] | CROP TOLERANCE[5] (Nihonbare) | | |
| | | VA[2] | PH[3] | DW[4] |
| Compound 1 | 4 | 0 | 103 | 107 |
| Compound 1 and Thiobencarb | 4 + 2100 | 0 | 102 | 110 |
| Comppund 1 and Dimepiperate | 4 + 3000 | 0 | 104 | 110 |
| Compound 1 and Esprocarb | 4 + 2100 | 0 | 101 | 106 |
| Compound 1 and Dymron | 4 + 2100 | 0 | 102 | 101 |
| Compound 1 | 8 | 3 | 95 | 83 |
| Compound 1 and Thiobencarb | 8 + 2100 | 0 | 101 | 108 |
| Compound 1 and Dimepiperate | 8 + 3000 | 0 | 103 | 103 |
| Compound 1 and Esprocarb | 8 + 2100 | 0.5 | 99 | 98 |
| Compound 1 and Dymron | 8 + 2100 | 1.0 | 100 | 96 |
| Thiobencarb | 2100 | 0 | 102 | 112 |
| Dimepiperate | 3000 | 0 | 102 | 106 |
| Esprocarb | 2100 | 0 | 92 | 94 |
| Dymron | 2100 | 0 | 102 | 107 |
| Untreated | - | 0 | 100 | 100 |

1. Application rate in grams active ingredient per hectare.
2. Visual crop injury (relative to untreated check) scale of:
0 to 100%
0 = no injury
100 = 100% plant death.
3. Plant Height (relative to untreated check) on scale of:
0 to 100%.
4. Dry Weight (relative to untreated check) on scale of:
0 to 100%.
5. Crop tolerance - Compounds were applied to transplanted rice 5 days after transplanting (var. Nihonbare) 2.0 to 2.2 leaf stage. Ratings were taken 15 days after application. Results are the average of three replications.

TABLE 16

| Herbicidal Efficacy of Compound 1 in United States | | | |
|---|---|---|---|
| RATE GAI/HA[3] | % CONTROL OR INJURY[1] | | |
| | EA[2] | SE[2] | RICE |
| 7 | 97 | 97 | 3 |
| 14 | 98 | 98 | 10 |
| 21 | 98 | 98 | 5 |

1. Evaluations made 57 days after application.
2. Abbreviations: EA = Eclipta alba SE = Sesbania exaltata
3. Application rate in grams active ingredient per hectare.

TABLE 17

| Herbicidal Efficacy of Compound 1 and 2,4-D in Thailand | | | | | | |
|---|---|---|---|---|---|---|
| TREATMENT | RATE GAI/HA[3] | % CONTROL OR INJURY[1] | | | | |
| | | CD | LL | MC[2] | SZ | RICE |
| Compound 1 | 4 | 100 | 87 | 100 | 100 | 16.6 |
| Compound 1 + 2,4-D | 4<br>750 | 100 | 100 | 100 | 100 | 24.4 |

1. Evaluations made 14 days after treatment.
2. Abbreviations: CD = Cyperus difformis
LL = Ludwigia linifolia
MV = Monochoria vaginalis
SZ = Sphenoclea zeylanica
3. Application rite in grams active ingredient per hectare.

TABLE 18

| Herbicidal Efficacy of Compound 1, Benzsulfuron methyl and 2,4-D in Thailand | | | | | |
|---|---|---|---|---|---|
| TREATMENT | RATE GAI/HA[3] | % CONTROL OR INJURY[1] | | | |
| | | CD | LL | SZ | RICE |
| Compound 1 | 4 | 100 | 100 | 98 | 0 |
| Bensulfuron methyl | 10<br>15<br>20 | 100<br>100<br>100 | 100<br>100<br>100 | 99<br>100<br>100 | 0<br>0<br>0 |
| Compound 1 + Bensulfuron methyl | 4<br>10 | 100 | 100 | 100 | 0 |
| Compound 1 + Bensulfuron methyl | 4<br>15 | 100 | 100 | 100 | 0 |
| Compound 1 + Bensulfuron methyl | 4<br>20 | 100 | 100 | 100 | 0 |
| 2,4-D | 1500 | 100 | 100 | 90 | 0 |
| Compound 1 + 2,4-D | 4<br>750 | 100 | 100 | 100 | 0 |

1. Evaluation made 13 days after treatment.
2. Abbreviations: CD = Cyperus difformis
LL - Ludwigia linifolia
SZ = Sphenoclea Zeylanica
3. Application rate in grams active ingredient per hectare.

TABLE 19

| Herbicidal Efficacy of Compound 1 Benzsulfuron Methyl and 2,4-D in Thailand | | | | | |
|---|---|---|---|---|---|
| TREATMENT | RATE GAI/HA[3] | % CONTROL OR INJURY[1] | | | |
| | | CD | LL | SZ | RICE |
| Compound 1 | 4 | 100 | 93 | 93 | 0 |
| Bensulfuron methyl | 10<br>15<br>20 | 100<br>100<br>100 | 100<br>100<br>100 | 88<br>100<br>100 | 0<br>0<br>0 |
| Compound 1 + Bensulfuron methyl | 4<br>10 | 100 | 100 | 100 | 0 |
| Compound 1 + Bensulfuron methyl | 4<br>15 | 100 | 100 | 100 | 0 |
| Compound 1 + Bensulfuron methyl | 4<br>20 | 100 | 100 | 100 | 0 |
| 2,4-D | 1500 | 100 | 97 | 86 | 0 |
| Compound 1 + 2,4-D | 4<br>750 | 100 | 100 | 100 | 0 |

1. Evaluation made 13 days after treatment.
2. Abbreviations: CD = Cuperus difformis
LL = Ludwigia linifolia
SZ = Sphenoclea zeylanica
3. Application rate in grams active ingredient per hectare.

TABLE 20

| Herbicidal Efficacy of Compound 1, benzsulfuron methyl and 2,4-D in Thailand | | | | | | |
|---|---|---|---|---|---|---|
| TREATMENT | RATE GAI/HA[3] | % CONTROL OR INJURY[1] | | | | |
| | | CI | FM | LL | SZ | RICE |
| Compound 1 Bensulfuron methyl | 4<br>10<br>15<br>20 | 0<br>77<br>90<br>95 | 0<br>80<br>100<br>100 | 67<br>80<br>80<br>87 | 60<br>23<br>60<br>53 | 0<br>0<br>0<br>0 |
| Compound 1 + Bensulfuron methyl | 4<br>10 | 95 | 100 | 98 | 97 | 0 |
| Compound 1 + Bensulfuron methyl | 4<br>15 | 100 | 100 | 100 | 100 | 0 |
| Compound 1 + Bensulfuron methyl | 4<br>20 | 98 | 90 | 100 | 97 | 0 |
| Compound 1 2,4-D | 4<br>750 | 95 | 90 | 100 | 88 | 0 |
| 2,4-D | 1500 | 100 | 100 | 100 | 33.3 | 0 |

1. Evaluations made 14 days after treatment.
2. Abbreviations: CI = Cuperus iria
FM = Fimbristylis miliacea
LL = Ludwigia linifolia
SZ = Sphenoclea zeylanica
3. Application rate in grams active ingredient per hectare.

TABLE 21

| Herbicidal Efficacy of Compound 1 and 2,4-D in Malaysia | | | | | | | |
|---|---|---|---|---|---|---|---|
| TREATMENT | RATE GAI/HA[3] | % CONTROL OR INJURY[1] | | | | | |
| | | FM[2] | LA | MC | MV | SG | SS |
| Compound 1 +2,4-D | 4 + 330 | 28 | 89 | 78 | 100 | 100 | 63 |
| Compound 1 +2,4-D | 4 + 500 | 28 | 88 | 98 | 100 | 100 | 62 |
| 2,4-D | 1000 | 73 | 93 | 56 | 100 | 74 | 55 |

1. Evaluations made 42 days after treatment.
2. Abbreviations: FM = Fimbristylis miliacea
LA = Ludwigia adscendens
MC = Masilea crenata
MV = Monochoria vaginalis
SG = Saggittaria guayanensis
SS = Scirpus spp.
3. Application rate in grams active ingredient per hectare.

Table 22

| Effects of Compound 1 in Combination With Thiobencarb and Bensulfuron Methyl on Rice Growth | | | | |
|---|---|---|---|---|
| TREATMENT | RATE GAI/HA[1] | CROP TOLERANCE[5] | | |
| | | VA[2] | PH[3] | DW[4] |
| Compound 1 | 8 | 0.5 | 99 | 92 |
| Compound 1 and Thiobencarb | 8 + 2100 | 1.5 | 93 | 87 |
| Compound 1 and Bensulfuron methyl | 8 + 75 | 3.5 | 62 | 65 |
| Compound 1 and Thiobencarb, and Bensulfuron methyl | 8 + 2100 + 75 | 1.5 | 94 | 88 |
| Bensulfuron | 75 | 3.5 | 84 | 76 |
| Bensulfuron methyl and Thiobencarb | 75 + 2100 | 1.5 | 94 | 83 |
| Thiobencarb | 2100 | 0 | 99 | 99 |
| Untreated | - | 0 | 100 | 100 |

1. Application rate in grams active ingredient per hectare.
2. Visual crop injury (relative to untreated check) on scale of:
0 to 100%
0 = no injury
100 = 100% plant death.
3. Plant height (relative to untreated check) on scale of:
0 to 100%.
4. Dry weight (relative to untreated check) on scale of:
0 to 100%.
5. Crop tolerance - compounds were applied to transplanted rice 7 days after transplanting (var. Koshihikari) at the 2.0 to 2.2 leafstage. Ratings were made 21 days after application. Results are the average of three replications.

Table 23

| Effects of Compound 1 in Combination With Bensulfuron Methyl and Thiobencarb or Pretilachlor on Rice Growth | | | | |
|---|---|---|---|---|
| TREATMENT | RATE GAI/HA[1] | CROP TOLERANCE[5] | | |
| | | VA[2] | PH[3] | DW[4] |
| Compound 1 | 2 | 3 | 86 | 73 |
| Bensulfuron Methyl | 25 | 2.5 | 89 | 79 |
| Compound 1 and Bensulfuron methyl | 2 + 25 | 3.5 | 86 | 69 |
| Compound 1 Bensulfuron methyl and Thiobencarb | 8 + 25 + 2100 | 2.5 | 87 | 73 |
| Compound 1 and Bensulfuron methyl and Pretilachlor | 2 + 25 + 600 | 2.5 | 90 | 72 |
| Thiobencarb | 2100 | 2 | 93 | 81 |
| Pretilachlor | 600 | 3 | 87 | 71 |
| Untreated | - | 0 | 100 | 100 |

1. Application rate in grams active ingredient per hectare.
2. Visual crop injury (relative to untreated check) on scale of:
0 to 100%
0 = no injury
100 = 100% plant death.
3. Plant height (relative to untreated check) on scale of:
0 to 100%.
4. Dry weight (relative to untreated check) on scale of:
0 to 100%.
5. Crop tolerance - compounds were applied to transplanted rice 7 days after transplanting (var. Koshihikari) at the 2.0 to 2.2 leaf stage. Ratings were made 21 days after application. Results are the average of three replications.

Table 24

| Effects of Compound 1 in Combination With Bensulfuron Methyl and Thiobencarb or Pretilachlor on Weed Control | | | | | | | | |
|---|---|---|---|---|---|---|---|---|
| TREATMENTS | RATE GAI/HA[1] | WEED CONTROL RATINGS[2] | | | | | | |
| | | EO[3] | CD[4] | MV[5] | BL[6] | SJ[7] | SP[8] | CS[9] |
| COMPOUND 1 | 2 | 1 | 10 | 10 | 10 | 7 | 8 | 1 |
| BENSULFURON METHYL | 25 | 1 | 1 | 10 | 10 | 5 | 8.5 | 6 |
| COMPOUND 1 AND BENSULFURON METHYL | 2 + 25 | 4 | 10 | 10 | 10 | 9 | 8.5 | 8 |
| COMPOUND 1, BENSULFURON METHYL AND THIOBENCARB | 2 + 25 + 2100 | 8 | 10 | 10 | 10 | 9 | 8.5 | 9 |
| COMPOUND 1, BENSULFURON METHYL AND PRETILACHLOR | 2 + 25 + 600 | 10 | 10 | 10 | 10 | 9 | 9 | 8 |
| THIOBENCARB | 2100 | 10 | 10 | 10 | 9 | 7 | 0 | 9 |
| PRETILACHLOR | 600 | 10 | 10 | 5 | 10 | 5 | 3 | 3 |
| UNTREATED | - | 0 | 0 | 0 | 0 | 0 | 0 | 0 |

1. Application rate in grams active ingredient per hectare.
2. Visual weed control (relative to untreated check) on scale of:
0 to 10
0 = no injury
10 = complete control.
3. EO = Echinochloa oryzicola
4. CD = Cyperus difformis
5. MV = Monochoria vaginalis
6. BL = Lindernia pyxidaria
7. SJ = Scirpus juncoides
8. SP = Sagittaria pygmaea
9. CS = Cyperus serotinus
10. Weeds were treated at the 1.0 leaf stage and evaluated four weeks later. Results are the average of two replications.

Table 25

| Effects of Compound 1 in Combination With Bensulfuron Methyl and Thiobencarb or Pretilachlor on Weed Control | | | | | | | | | |
|---|---|---|---|---|---|---|---|---|---|
| TREATMENTS | RATE GM.A.I.[1] | WEED CONTROL RATINGS[2] | | | | | | | |
| | | EO[3] | CD[4] | MV[5] | BL[6] | SJ[7] | SP[8] | CS[9] |
| COMPOUND 1 | 2 | 1 | 7 | 10 | 10 | 6 | 8 | 0 |
| BENSULFURON METHYL | 25 | 1 | 10 | 9 | 9 | 5 | 8 | 2 |
| COMPOUND 1 AND BENSULFURON METHYL | 2 + 25 | 3 | 10 | 10 | 10 | 8.5 | 8.5 | 3 |
| COMPOUND 1, BENSULFURON METHYL AND THIOBENCARB | 2 + 25 + 2100 | 5 | 10 | 10 | 10 | 9 | 8 | 6 |
| COMPOUND 1, BENSULFURON METHYL AND PRETILACHLOR | 2 + 25 + 600 | 6 | 10 | 10 | 10 | 9 | 8 | 3 |
| THIOBENCARB | 2100 | 6 | 10 | 10 | 9.5 | 8.5 | 0 | 2 |
| PRETILACHLOR | 600 | 7 | 10 | 3 | 7 | 2 | 6 | 3 |
| UNTREATED | - | 0 | 0 | 0 | 0 | 0 | 0 | 0 |

1. Application rate in grams active ingredient per hectare.
2. Visual weed control (relative to untreated check) on scale of:
0 to 10
0 = no injury
10 = complete control.
3. EO = Echinochloa oryzicola
4. CD = Cyperus difformis
5. MV = Monochoria vaginalis
6. BL = Lindernia pyxidaria
7. SJ = Scirpus juncoides
8. SP = Sagittaria pygmaea
9. CS = Cyperus serotinus
10. Weeds were treated at the 2.0 leaf stage and evaluated four weeks later. Results are the average of two replications.

TABLE 26

| Herbicidal Efficacy and Crop Tolerance of Compound 1 and Compound 2 in a Greenhouse Test | | | | | | | |
|---|---|---|---|---|---|---|---|
| TREATMENT | RATE GAI/HA[1] | % CONTROL OR INJURY[2] | | | | | |
| | | M101[3] | LEMONT[4] | CD[5] | AP[6] | AT[7] | SR[8] |
| Compound 1 | 1 | 0 | 10 | 60 | 0 | 80 | 90 |
| | 2 | 10 | 20 | 60 | 0 | 95 | 95 |
| | 4 | 10 | 40 | 80 | 60 | 95 | 95 |
| | 8 | 35 | 50 | 100 | 70 | 95 | 95 |
| Compound 2 | 1 | 0 | 30 | 70 | 0 | 95 | 0 |
| | 2 | 0 | 40 | 80 | 0 | 95 | 0 |
| | 4 | 30 | 70 | 100 | 20 | 95 | 80 |
| | 8 | 50 | 80 | 100 | 30 | 95 | 80 |
| Untreated | - | 0 | 0 | 0 | 0 | 0 | 0 |

1. Application rate in grams active ingredient per hectare.
2. Visual weed control or crop injury (relative to untreated check) on scale of:
0 to 100%
0 = no injury
100 = 100% plant death.
3. M101 = japonica rice variety M101.
4. LEMONT = indica rice variety Lemont.
5. CD = Cyperus difformis
6. AP = Alternanthera philoxeroides
7. AT = Alisma triviale
8. SR = Sagittaria rigida 9. Rice was transplanted at the 2.0 to 2.5 leaf stage and treated 12 days later. Crop injury and weed control ratings were made 24 days after treatment.

**TABLE 27**

Expected[1] and Observed Activity of Combinations of Compound 1 and Bensulfuron Methyl on Weeds

| Compound | Rate | Table/ Species | Expected | Observed |
|---|---|---|---|---|
| 1 + Bensulfuron Methyl | 2 + 10 | 10/SZ | 7.9 | 9.1 |
| | 2 + 10 | 10/CI | 2.0 | 6.33 |
| | 4 + 10 | 10/SZ | 9.3 | 9.93 |
| | 4 + 10 | 10/CI | 2.0 | 5.0 |
| | 4 + 20 | 10/SZ | 9.7 | 10 |
| | 4 + 20 | 10/CI | 8.0 | 9 |
| 1 + Bensulfuron Methyl | 4 + 10 | 12/SZ | 8.4 | 10 |
| | 4 + 15 | 12/SZ | 8.8 | 10 |
| | 4 + 20 | 12/SZ | 8.4 | 10 |
| 1 + Bensulfuron Methyl | 4 + 10 | 12/CI | 6.8 | 8.33 |
| | 4 + 15 | 12/CI | 9.0 | 10 |
| | 4 + 20 | 12/CI | 9.4 | 9.63 |
| 1 + Bensulfuron Methyl | 4 + 15 | 12/JL | 9.46 | 10 |
| | 4 + 20 | 12/JL | 9.88 | 10 |
| 1 + Bensulfuron Methyl | 4 + 15 | 13/CI | 9.83 | 10 |
| 1 + Bensulfuron Methyl | 4 + 10 | 20/CI | 77 | 95 |
| | 4 + 10 | 20/FM | 80 | 100 |
| | 4 + 10 | 20/LL | 93.4 | 98 |
| | 4 + 10 | 20/SZ | 69.2 | 97 |
| 1 + Bensulfuron Methyl | 4 + 15 | 20/CI | 90 | 100 |
| | 4 + 15 | 20/LL | 93.4 | 100 |
| | 4 + 15 | 20/SZ | 84 | 100 |
| 1 + Bensulfuron Methyl | 4 + 20 | 20/CI | 95 | 98 |
| | 4 + 20 | 20/LL | 95.7 | 100 |
| | 4 + 20 | 20/SZ | 81.2 | 97 |
| 1 + Bensulfuron Methyl | 2 + 25 | 24/EO | 1.9 | 4 |
| | 2 + 25 | 24/SJ | 8.5 | 9 |
| 1 + Bensulfuron Methyl | 2 + 25 | 25/EO | 1.9 | 3 |
| | 2 + 25 | 25/SJ | 8.0 | 8.5 |
| | 2 + 25 | 25/CS | 2.0 | 3 |

1. Kolby[2] equation for calculating synergism.

$$E = A + B - \frac{A \times B}{100}$$

E = expected value

A = observed value for Compound 1

B = observed value for bensulfuron methyl

if the observed value minus the expected value is positive, the combination is considered synergistic.

For example:

Table 20 A = 60 on SZ at 4 g/ha

B = 23 on SZ at 10 g/ha

$$E = 60 + 23 - \frac{60 \times 23}{100}$$

$$E = 69.2$$

The observed value of Compound 1 in combination with bensulfuron methyl on sphenoclea zeylanica at the 4 and 10 g rate respectively is 97.

Observed - Expected

97 - 69.2 = + 27.8

2. Kolby, S.R., Weeds 15:20-22, 1967.

TABLE 28

| Expected and Observed Activity of Combinations of Compound 1 and Bensulfuron Methyl on Rice | | | | |
|---|---|---|---|---|
| Compound | Rate | Table Species | Expected | Observed |
| 1 + Bensulfuron Methyl | 2 + 25 | 23/Va | 4.75 | 3.5 |

The expected injury to rice (as calculated by the Kolby equation) is reduced, by the combination of Compound No. 1 with bensulfuron methyl. This constitutes a substantial safening of the rice crop.

## Claims

**1.** Compositions comprising mixtures of compounds of the formula

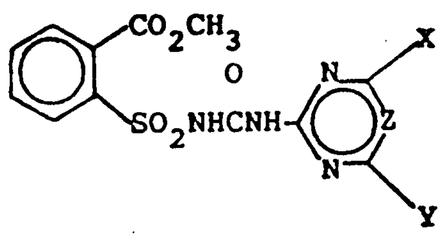

I

wherein

X is $CH_3$ or $OCH_3$;

Y is $OCH_3$; and

Z is N or CH,

provided that when Z is CH then X is $OCH_3$ and when Z is N then X is $CH_3$,

with methyl 2-[[[[[(4,6-dimethoxy-2-pyrimidinyl) amino]carbonyl]amino)sulfonyl] methyl]benzoate (bensulfuron methyl).

2. The compositions of Claim 1 comprising a compound of Formula I wherein Z is N with bensulfuron methyl.

3. A method for controlling the growth of undesired vegetation in a rice crop by applying to the crop after transplantation or emergence 0.5 to 10 g/ha of a compound of Claim 1 of Formula I

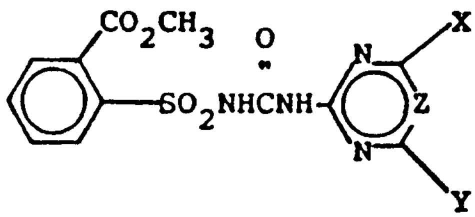

I

wherein

X is $CH_3$ or $OCH_3$;

Y is $OCH_3$; and

Z is N or CH,

provided that when Z is CH then X is $OCH_3$ and when Z is N then X is $CH_3$

either alone or in combination with other herbicides selected from 2-4-dichlorophenoxy acetic acid, methyl 2-[[[[[(4,6-dimethoxy-2-pyrimidinyl)amino]carbonyl]amino]sulfonyl]methyl] benzoate (bensulfuron methyl), S-[4-chlorophenyl)methyl] diethylcarbamothioate (thiobencarb), S-1-methyl-1-phenylethylpiperidine-1-carbothioate (dimepiperate), S-benzyl-N-ethyl-N-(1,2-dimethyl) propylthiol carbamate (esprocarb), 1-(α,α-dimethylbenzyl)-3-p-tolylurea (dymron) or N-(3,4-dichlorophenyl) propanamide (propanil).

4. The method of Claim 3 wherein Z is N, X is $CH_3$ and Y is $OCH_3$.

5. The method of Claim 3 wherein Z is CH, X and Y are $OCH_3$.

6. The method of Claim 4 wherein a herbicidally effective amount of 2,4-dichlorophenoxyacetic acid is applied in admixture with the compound of Formula I.

7. The method of Claim 4 wherein a herbicidally effective amount of bensulfuron methyl is applied in admixture with the compound of Formula I.

8. The method of Claim 4 wherein a herbidically effective amount of S-[(4-chlorophenyl)methyl]-diethylcarbamothioate (Thiobencarb) is applied in admixture with the compound of Formula I.

9. The method of Claim 4 wherein a herbidically effective amount of S-1-methyl-1-phenylethyl piperidine-1-carbothioate (Dimepiperate) is applied in admixture with the compound of Formula I.

10. The method of Claim 4 wherein a herbicidally effective amount of S-benzyl-N-ethyl-N-(1,2-dimethyl) propylthiol carbamate (Esprocarb) is applied in admixture with the compound of Formula I.

11. The method of Claim 4 wherein a herbicidally effective amount of 1-(α,α-dimethyl-benzyl)-3-p-tolylurea (Dymron) is applied in admixture with the compound of Formula I.

12. The method of Claim 4 wherein a herbicidally effective amount of N-(3,4-dichlorophenyl) propanamide (propanil) is applied in admixture with the compound of Formula I.

**Patentansprüche**

1. Präparate, die Gemische von Verbindungen der Formel

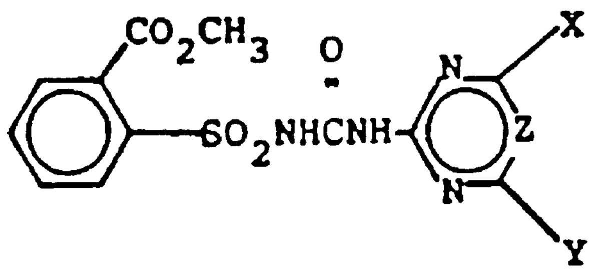

I

umfassen, worin
X für $CH_3$ oder $OCH_3$ steht;
Y für $OCH_3$ steht; und
Z N oder CH bedeutet,
mit der Maßgabe, daß wenn Z für CH steht, dann X für $OCH_3$ steht, und wenn Z für N steht, dann X für $CH_3$ steht,
mit Methyl-2-[[[[[(4,6-dimethoxy-2-pyrimidinyl)-amino]-carbonyl]-amino]-sulfonyl]-methyl]-benzoat-(bensulfuronmethyl).

2. Präparate nach Anspruch 1, die eine Verbindung der Formel I, worin Z für N steht, mit Bensulfuronmethyl umfassen.

3. Verfahren zur Kontrolle des Wachstums von unerwünschter Vegetation bei einer Reisfrucht durch Ausbringen auf die Frucht nach der Umpflanzung oder Emergenz von 0,5 bis 10 g/ha einer Verbindung nach Anspruch 1 der Formel I

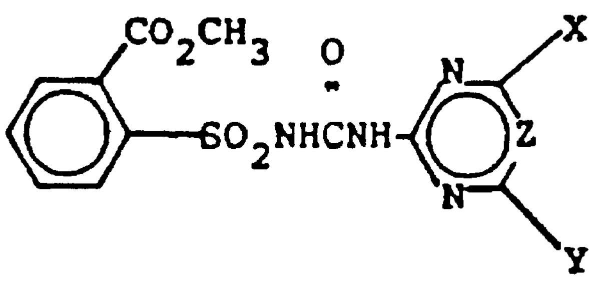

I

worin

X für $CH_3$ oder $OCH_3$ steht;
Y für $OCH_3$ steht; und
Z N oder CH bedeutet,
mit der Maßgabe, daß wenn Z für CH steht, dann X für $OCH_3$ steht, und wenn Z für N steht, dann X für $CH_3$ steht.

**4.** Verfahren nach Anspruch 3, bei dem Z N bedeutet, X $CH_3$ bedeutet und Y $OCH_3$ bedeutet.

**5.** Verfahren nach Anspruch 3, bei dem Z CH bedeutet, X und Y $OCH_3$ bedeuten.

**6.** Verfahren nach Anspruch 4, bei dem eine als Herbizid wirksame Menge von 2,4-Dichlorphenoxyessigsäure in einem Gemisch mit der Verbindung der Formel I ausgebracht wird.

**7.** Verfahren nach Anspruch 4, bei dem eine als Herbizid wirksame Menge von Bensulfuronmethyl in einem Gemisch mit der Verbindung der Formel I ausgebracht wird.

**8.** Verfahren nach Anspruch 4, bei dem eine als Herbizid wirksame Menge von S-[(4-Chlorphenyl)-methyl]-diethylcarbamothioat (Thiobencarb) in einem Gemisch mit der Verbindung mit der Formel I ausgebracht wird.

**9.** Verfahren nach Anspruch 4, bei dem eine als Herbizid wirksame Menge von S-1-Methyl-1-phenylethylpiperidin-1-carbothioat (Dimepiperat) in einem Gemisch mit der Verbindung der Formel I ausgebracht wird.

**10.** Verfahren nach Anspruch 4, bei dem eine als Herbizid wirksame Menge von S-Benzyl-N-ethyl-N-(1,2-dimethyl)-propylthiolcarbamat (Esprocarb) in einem Gemisch mit der Verbindung der Formel I ausgebracht wird.

**11.** Verfahren nach Anspruch 4, bei dem eine als Herbizid wirksame Menge von 1-(α,α-Dimethylbensyl)3-p-tolylharnstoff (Dymron) in einem Gemisch mit der Verbindung der Formel I ausgebracht wird.

**12.** Verfahren nach Anspruch 4, bei dem eine als Herbizid wirksame Menge von N-(3,4-Dichlorphenyl)-propanamid (Propanil) in einem Gemisch mit der Verbindung der Formel I ausgebracht wird.

## Revendications

**1.** Compositions comprenant des mélanges de composés de la formule

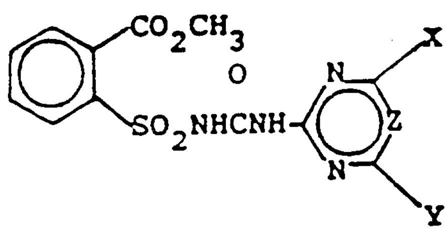

I

dans laquelle
X est $CH_3$ ou $OCH_3$ ;
Y est $OCH_3$ ; et
Z est N ou CH,
à condition que si Z est CH, alors X soit $OCH_3$, et si Z est N, alors X soit $CH_3$,
avec le 2-[[[[(4,6-diméthoxy-2-pyrimidinyl)amino]carbonyl]amino]sulfonyl]méthyl]benzoate de méthyle (bensulfuronméthyl).

2. Les compositions de la revendication 1, comprenant un composé de Formule I où Z est N avec le bensulfuron-méthyl.

3. Un procédé pour combattre la croissance de végétation indésirable dans une culture de riz, par application à la culture après repiquage ou levée de 0,5 à 10 g/ha d'un composé de la revendication 1 de Formule I

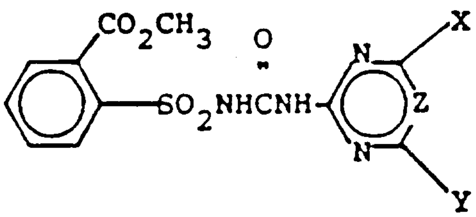

I

dans laquelle
X est $CH_3$ ou $OCH_3$ ;
Y est $OCH_3$ ; et
Z est N ou CH,
à condition que si Z est CH, alors X soit $OCH_3$, et
si Z est N, alors X soit $CH_3$.

4. Le procédé de la revendication 3, dans lequel Z est N, X est $CH_3$ et Y est $OCH_3$.

5. Le procédé de la revendication 3, dans lequel Z est CH, X et Y sont $OCH_3$.

6. Le procédé de la revendication 4, dans lequel une quantité à effet herbicide d'acide 2,4-dichlorophénoxyacétique est appliquée en mélange avec le composé de Formule I.

7. Le procédé de la revendication 4, dans lequel une quantité à effet herbicide de bensulfuron-méthyl est appliquée en mélange avec le composé de Formule I.

8. Le procédé de la revendication 4, dans lequel une quantité à effet herbicide de S-[(4-chlorophényl)-méthyl] diéthylcarbamothioate (thiobencarbe) est appliquée en mélange avec le composé de Formule I.

9. Le procédé de la revendication 4, dans lequel une quantité à effet herbicide de S-1-méthyl-1-phényléthyl pipéridine-1-carbothioate (dimépipérate) est appliquée en mélange avec le composé de Formule I.

10. Le procédé de la revendication 4, dans lequel une quantité à effet herbicide de S-benzyl-N-éthyl-N-(1,2-diméthyl)propylthiocarbamate (esprocarbe) est appliquée en mélange avec le composé de Formule I.

11. Le procédé de la revendication 4, dans lequel une quantité à effet herbicide de 1-(α,α-diméthylbenzyl)-3-*p*-tolylurée (dymron) est appliquée en mélange avec le composé de Formule I.

12. Le procédé de la revendication 4, dans lequel une quantité à effet herbicide de N-(3,4-dichlorophényl)-propionamide (propanil) est appliquée en mélange avec le composé de Formule I.